Europäisches Patentamt

European Patent Office

Office européen des brevets

(19)

(11) Publication number: **0 189 138**
A2

# EUROPEAN PATENT APPLICATION

(21) Application number: 86100582.5

(51) Int. Cl.⁴: **G 01 N 23/04,** G 21 K 4/00

(22) Date of filing: 17.01.86

(30) Priority: 19.01.85 JP 8098/85

(43) Date of publication of application: 30.07.86
Bulletin 86/31

(84) Designated Contracting States: **CH DE FR GB IT LI NL
SE**

(71) Applicant: **HITACHI, LTD., 6, Kanda Surugadai 4-chome
Chiyoda-ku, Tokyo 100 (JP)**

(72) Inventor: **Sadamura, Hiroyoshi, D-203 2-3 Ayukawa-cho,
Hitachi-shi Ibaraki 316 (JP)**
Inventor: **Maeda, Hiroshi, 5-18-3 Suwa-cho, Hitachi-shi
Ibaraki 316 (JP)**
Inventor: **Kon, Yoshinobu, 1-11-11 Oonuma-cho,
Hitachi-shi Ibaraki 316 (JP)**
Inventor: **Fukuoka, Masaru, 3-18-17 Higashi-taga-cho,
Hitachi-shi Ibaraki 316 (JP)**
Inventor: **Sasaki, Koji, 1-7-8 Daihara-cho, Hitachi-shi
Ibaraki 317 (JP)**

(74) Representative: **Patentanwälte Beetz sen. - Beetz jun.
Timpe - Siegfried - Schmitt-Fumian,
Steinsdorfstrasse 10, D-8000 München 22 (DE)**

(54) Apparatus for inspecting interior of articles.

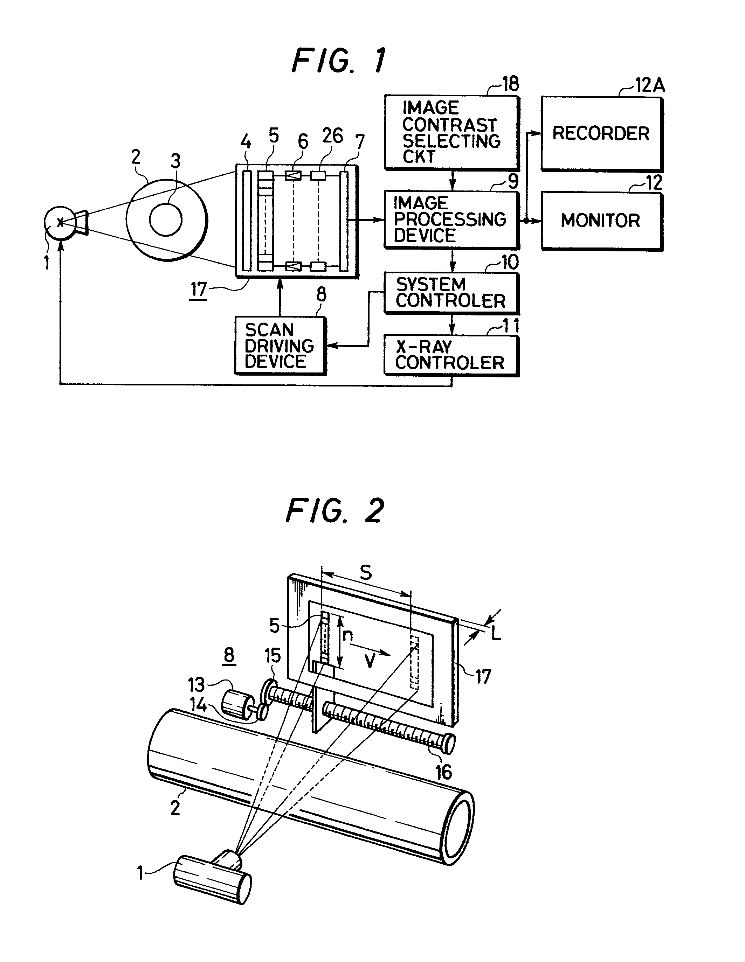

(57) This invention relates to technique of examining an article
to be inspected by fluoroscopy with a self-rectification type of
X-ray generator. The image of the article (2) to be inspected is
converted to visible light by a fluorescent plate (4). The image
on the fluorescent plate is received by a plurality of image sen-
sors (5) aligned either longitudinally or transversely with
respect to the X-ray generator. After completion of the recep-
tion, these image sensors are moved in the transverse (or
longitudinal) direction corresponding to their width by a scan/
driving device (8). After the scanning of the image sensors (5)
is completed, the image received by each image sensor (5) is
reproduced and internal diagnosis of the article is made from
the reproduced image (Fig. 1).

S P E C I F I C A T I O N   ·

TITLE OF THE INVENTION:

APPARATUS FOR INSPECTING INTERIOR OF ARTICLES

FIELD OF THE INVENTION

This invention relates to an apparatus which uses radiation for inspecting the interior of articles and which can be used in a narrow, limited space. More particularly, the present invention relates to an apparatus for inspecting the interior of articles which is suitable for inspecting or diagnosing the interior of large articles which cannot be transported or moved easily, such as enclosed or sealed type containers.

BACKGROUND OF THE INVENTION

Generally, large articles having an enclosed or sealed type container whose internal state must be inspected or diagnosed but which cannot be transported or moved easily include enclosed type electric equipment, nuclear powered equipment, and so forth. Among these articles, the following description will primarily deal with the enclosed electric equipment by way of example.

Enclosed switches such as gas-filled circuit breakers using an insulating medium such as $SF_6$ and disconnecting switches are well known as examples of electric equipment having the enclosed type container.

In the enclosed type switches described above, a contact portion using tulip-type contactors and a contactor device having a pair of contactors that engage, and disengage are disposed, and an arc is generated in the contactors when the path is opened. The contactor device is damaged by a short-circuit current in the case of the gas-filled circuit breaker and by a loop current in the case of the gas disconnecting device. Component parts are replaced depending upon the degree of damage. In this instance, it is important to judge whether the components must be replaced or not. Since the contactor device or the like subjected to the damage is housed in an opaque metallic container sealing therein $SF_6$ or the like as an insulating medium, the degree of the damage of the contactor device can not be easily detected and diagnosed. For these reasons, the development of a system which can measure or detect the degree of the damage of the connecting portion or the connecting device from outside has been desired for the enclosed type electric equipment such as gas-filled circuit breakers and disconnecting switches for power use.

Fluoroscopic apparatuses have been known in the art.  An example of such apparatuses has a construction in which an X-ray generator is driven by a d.c. power source, an imaging device consists of a fluorescent plate for converting the radiation to visible light and a scan/driving device for sequentially scanning the image appearing on the fluorescent plate in order to make the imaging device compact, and an image is thereafter reproduced.

Japanese Patent Laid-Open No. 21840/1984 entitled "X-ray Fluoroscopic Apparatus" laid-open on December 8, 1985 is an example of the apparatus for inspecting the interior of articles.  Since the X-ray generator of this prior art reference is driven by a d.c. power source, it is heavy.  Since the driving device mechanically drives a mirror, its size and weight are not suitable for use in a limited space.

A self-rectification control type of X-ray generator has been known in the art as a lightweight X-ray generator.  However, this X-ray generator generates X-ray pulses that are intermittently rectified so that the quantity of the X-ray radiation per unit time is smaller than that of the d.c. power driving type X-ray generator. Therefore, the image on the fluorescent plate must be taken on a film.

SUMMARY OF THE INVENTION

It is an object of the present invention to provide an apparatus for inspecting the interior of articles which is compact and light in order to facilitate its transportation and installation, and which can inspect or diagnose the interior of a given article within a short period.

The present invention uses a self-rectification control X-ray generator. A plurality of image sensors that are aligned either longitudinally or transversely with respect to the X-ray generator are used as an imaging device so as to receive the image on the fluorescent plate, and are scanned in the direction transverse with respect to the X-ray generator if the image sensors are aligned logitudinally, and in the longitudinal direction when they are aligned transversely.

As described above, the present invention uses the self rectification control X-ray generator and the image sensor system so as to reduce the weight of the apparatus. In addition, the present invention employs a system which scans the images received by the image sensors and reproduces them electro-optically by a method which will be described later. Therefore, the inspection time can be shortened.

BRIEF DESCRIPTION OF THE DRAWINGS

Fig. 1 is a block diagram of an apparatus for inspecting the interior of articles in accordance with one embodiment of the present invention;

Fig. 2 is a perspective view of the principal portions of the apparatus shown in Fig. 1;

Fig. 3 is an explanatory view useful for explaining an imaging method by an imaging device of the present invention;

Fig. 4 is an explanatory view useful for explaining a scanning method of an image sensor shown in Fig. 1 and

Fig. 5 is a diagram graphically showing outputs of the image processing device in dependency of its input.

DESCRIPTION OF THE PREFERRED EMBODIMENTS

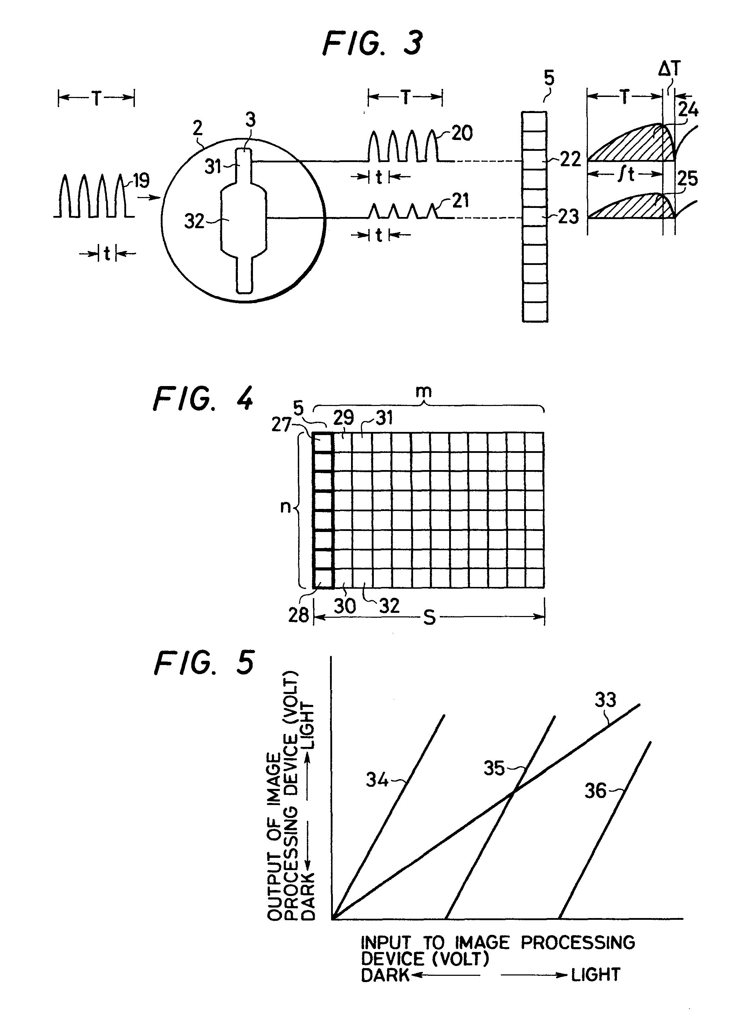

Referring to Figs. 1 and 3, X-rays 19 are radiated in a pulse-like form from a self rectification control type X-ray generator 1, and are then damped by an article 3 stored in a sealed vessel 2. In this case, the X-rays passing through the portion 31 of the article 1 which is relatively thin turn into a pulse waveform represented by reference numeral 20 while the X-rays passing through the portion 31 of the article 1 which is relatively thick turn into a pulse waveform represented by reference numeral 21. These pulse waveforms then pass through a fluorescent plate 4 and are accepted by pixels 22 and 23 of an image sensor 5 that are aligned with one another. The number of the pulses 19 that are emitted per unit time T is the same as the number of the pulses 20, 21 after passing through the article to be inspected per unit time T, but the peak values of these pulses 19, 20, 21 are different.

Optical signals received by the respective pixels of the image sensor 5 are amplified by an amplifier 6 and are then input to an integrator 26. The signals are integrated for each unit time T as represented by 24 and 25 by the integrator 26, and are then discharged in the course of a predetermined discharge time ΔT.

The output of the integrator 26 is further applied to an operational unit 7 for A/D conversion. The fluorescent plate 4, the image sensor 5, the amplifier 6, the integrator 26 and the operational unit 7 are placed in a container having an appropriate size to constitute an imaging device 17. This imaging device 17 may consist principally of the fluorescent plate 4 and the image sensor 5, with the amplifier 6, the integrator 26 and the operational unit 7 being put together to constitute an accessory device. The imaging device 17 is controlled by an instruction from a system controller 10 as will be described elsewhere.

The system controller 10 sends control signals to an X-ray controller 11 in order to control the X-ray generator 1 and to radiate the X-rays to the article 3 to be inspected. Furthermore, the system controller 10 lets the X-ray controller 11 produce the output signals one by one for each pixel to the operational unit 26 in the direction from pixel 27 to pixel 28 of the image sensor 5 shown in Fig. 4. The output of the operational unit 26 stores the data signal covering pixels 27 and 28 at designated addresses in a memory of an image processing device through the operational unit 7. When the output signal of pixel 28 is registered at the designated address in the image processing device 9, the system controller 10 drives a scan/driving device 8 so as to drive the image sensor 5 to a next scanning position, and to store the reception optical output ranging from pixels 29 to 30 at a designated address in the image processing device. When the registration of the pixels up to pixel 30 is similarly completed to the designated addresses of the image processing device, the scan/driving device 8 operates and the reception optical output from the pixels 31 and 32 is recorded at the designated addresses of the image processing device.

As shown in Fig. 2, the scan/driving device 8 consists of a motor 13, gears 14, 15 and a feed screw 16. The device moves the image sensor from one to the other of a transmission visual field of the article 3 to be inspected.

An image corresponding to the image displayed on the fluorescent plate 4 is subjected to A/D conversion and is then reproduced on a monitor 12 or a recorder 12A, such as a video tape recorder, on the basis of the memory recorded in the image processor by the instruction from the system control signal 10 after the completion of scanning by the image sensor.

Here, the number n of image sensors 5 that are aligned and the number of pixels in the longitudinal and

- 6 -

transverse directions that form a transmission image are in agreement with each other, and the scanning speed V is determined by the number m of pixels on the abscissa forming the transmission image and the moving distance S.  In other words, the transmission image of the transmission visual field as a whole is formed by forming a pixel line of the ordinate of the transmission image by a plurality of image sensors 5 while scanning the length of the transmission visual field in the direction of its width.

As described already, the continuous X-ray type or the pulse X-ray radiation type is used as the radiation source.  In the case of self rectification control, the X-rays are radiated in a pulse-like form.  Since the X-ray dose is a low output, opto-electrically converted pulse signals obtained by the image sensor are integrated in order to botain a signal of one pixel.  The integration time T in this case is determined by the following equation:

$$T = \Delta T(n - 1) = \frac{S}{V} \cdot \frac{1}{m.n} (n - 1) \quad ..... \quad (1)$$

where $\Delta T$ is a time required for the discharge of a data signal of one integrated pixel.

Therefore, the pulse number N of the opto-electrically converted signal to obtain one pixel is given as follows with f representing the pulse frequency:

$$N = T \cdot f \qquad\qquad ........ (2)$$

The pulse number N within the time T is about 232 (pulses) when the moving distance S is 300 mm, the scanning speed V is 1 m/sec, the number m of pixels on the abscissa forming the transmission image is 256, the number n of pixels on the ordinate is 192 and the pulse frequency f is 200 Hz.

The image sensors 5 may be aligned one by one in the direction of height of the article 3 to be inspected through the fluoresent plate 4 as in the embodiment described above. It is also possible to align a plurality of lines of image processors in parallel with one another in order to take the image within a short period.

The image obtained by the image processing device 9 may be immediately judged by the monitor 12. Alternatively, it is possible to record the image on the recoder 12A so that each portion can be suitably judged by other processing or the image can be compared with the internal inspection to be effected later to diagnose defects.

In the embodiment described above, a plurality of image sensors arranged via the fluorescent plate with respect to the radiation source in place of the mirror of the fluorescent plate direct imaging system of the prior art technique, and the opto-electrically converted signals are calculated to a data quantity sufficient to obtain one pixel in order to obtain the transmission image. Therefore, the depth L of the imaging device portion can be drastically reduced, and the weight can also be reduced drastically.

The weight of the d.c. X-ray generation portion is 88 kg, the weight of the self-rectification control type X-ray generation portion is 35 kg, the weight of a d.c. type imaging device is 120 kg and the weight of the imaging device of the present invention is 40 kg.

Next, an image contrast selecting circuit 18 of the present invention will be described. An optimal tone wedge exists for each transmitted portion in the X-ray transmission image. The present invention provides a method which easily accomplishes the image tone wedge. In order to obtain the image tone wedge, it has been a customary practice to adjust the intensity of the X-rays radiated from the X-ray generator 1. In the present invention, the output 33 from the image processing device to the monitor 12 or to the recorder 12A is converted to the outputs 34, 35, 36 such as shown in Fig. 5, for example. This output conversion can be attained by disposing a function generator in the image constrast selecting circuit. The function generator can be changed over manually.

The apparatus for inspecting the interior of articles in accordance with the present invention can reduce the size and weight of the apparatus as a whole, and can inspect and diagnose the interior of articles accurately and quickly by image processing.

What is claimed is:

1. In an apparatus for inspection the interior of articles by arranging an article (2) to be inspected between an X-ray generator and an imaging device and imaging the interior of said article to be inspected by radiation, the improvement wherein said X-ray generator (1) is of a self-rectification control type, and said imaging device consists of a fluorescent plate (4) for converting said radiation to visible light, a plurality of image sensors (5) to which said radiation is transmitted through said fluorescent plate (4), and a scanning device (8) for scanning said image sensors from one side of said article (2) to be inspected to the other in the longitudinal or transverse direction of said radiation radiated from said X-ray generator (1).

2. The apparatus for inspecting the interior of articles as defined in claim 1 wherein said image sensors (5) are arranged on a line in the longitudinal or transverse direction of said radiation radiated from said X-ray generator.

3. The apparatus for inspecting the interior of articles as defined in claim 1 wherein said imaging device further includes integrators (26) each connected to each of said image sensors (5) and integrating the signal of said image sensor, an operational unit portion (7) numerically converting the output from each of said integrators (26), an image processing device (9) having a memory for recording the output from said operational unit portion, and a display device (12) displaying the internal image of said article to be inspected.

4. The apparatus for inspecting the interior of articles as defined in claim 3 wherein said imaging device further includes a system controlling device (10) sending a control signal to an X-ray controller (11) for controlling said X-ray generator (1), sends an instruction signal to said image processing device (9) so as to let it sequentially record the outputs from said image sensors in said memory in said
image processing device, and produces an instruction so as
to move said scanning device (8) to the next position in the
longitudinal or transverse direction when recording to said
image processing device is completed.

5. The apparatus for inspecting the interior of
articles as defined in claim 3 wherein said image processing device includes an image contrast selecting circuit (18) for
changing over the contrast of said image displayed on said
display device (12).

FIG. 1

FIG. 2

0189138

FIG. 3

FIG. 4

FIG. 5

OUTPUT OF IMAGE PROCESSING DEVICE (VOLT)
DARK ← → LIGHT

INPUT TO IMAGE PROCESSING DEVICE (VOLT)
DARK ← → LIGHT